(19) Europäisches Patentamt
European Patent Office
Office européen des brevets

(11) Publication number: 0 042 724 B1

(12) EUROPEAN PATENT SPECIFICATION

(45) Date of publication of patent specification: 19.06.85

(51) Int. Cl.[4]: C 08 L 67/02, C 08 L 35/06

(21) Application number: 81302727.3

(22) Date of filing: 17.06.81

# (54) Polyethylene terephthalate blends.

(30) Priority: 23.06.80 US 162138

(43) Date of publication of application:
30.12.81 Bulletin 81/52

(45) Publication of the grant of the patent:
19.06.85 Bulletin 85/25

(84) Designated Contracting States:
BE CH DE FR GB IT LI NL

(56) References cited:
GB-A-1 304 740
GB-A-1 429 328

(73) Proprietor: ETHYL CORPORATION
330 South Fourth Street P.O. Box 2189
Richmond Virginia 23219 (US)

(72) Inventor: Hornbaker, Edwin Dale
10968 Worthington Avenue
Baton Rouge Louisiana (US)
Inventor: Jones, Jesse Dwane
3744 Evangeline Street
Baton Rouge Louisiana (US)

(74) Representative: Baillie, Iain Cameron et al
c/o Ladas & Parry Isartorplatz 5
D-8000 München 2 (DE)

EP 0 042 724 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Polyethylene terephthalate (PET) has achieved considerable importance as a raw material for the preparation of moldings, film and fibers. Preparation of PET is described, inter alia, in Whinfield et al., U.S. Patent 2,465,319 and in Pengilly, U.S. Patent 3,047,539, and in Kirk-Othmer, *Encyclopedia of Chemical Technology,* Second Edition, Vol. 16, pp. 159 et. seq. (1968).

Many applications for injection and extrusion molded parts require resistance to elevated temperatures, and it is in such applications where PET manifests certain undesirable physical characteristics. Unreinforced PET has been of very limited interest for injection and extrusion molded parts due to its low HDT (Heat Deflection Temperature, also sometimes referred to as Heat Distortion Temperature). For example, PET has an HDT of about 75°C. at 1.82 MPa (264 psi). HDT is a measure of an important thermal property of a thermoplastic material wherein a bar of the material, held in flexure under constant load, usually at 1.82 or 0.46 MPa (264 or 66 psi), deforms a specified amount and the temperature at which this specified deformation occurs is the HDT—see Billmeyer, *Textbook of Polymer Science,* page 112, John Wiley and Sons, Inc. (1962).

U.S. Patent 3,644,574 discloses blends of 1,4-butanediol polyesters with from about 1 to about 40 weight percent of a vinyl aromatic polymer (e.g., a styrenic polymer) which polymer may be, inter alia, a copolymer with maleic anhydride. The blends of this patent exhibit increased HDT over the unblended polyester. However, that patent discloses at column 1, lines 42—47, that the improvements observed with polybutylene terephthalate are not obtained when the polyester is poly(ethylene terephthalate).

GB—A—1 304 740 lists the application member of US Patent 3 644 574 as identification of the Convention document. The subject matter of GB—A—1 304 740 is substantially the same as that of the cited US PATENT. It is stated therein that minor amounts of other poly(alkylene terephthalates) can be present in admixture with the polybutylene terephthalates. The major component is, however, polybutylene terephthalate.

GB—A—1 429 328 is similar to the aforementioned patents but limits the amount of vinylaromatic units in the added vinylaromatic copolymer to less than 50 weight per cent.

The present invention provides a thermoplastic molding composition which comprises an intimate admixture of: (a) a polyethylene terephthalate and (b) a copolymer of a vinyl aromatic compound and an α,β-unsaturated cyclic anhydride.

As is shown herein, the blends of this invention exhibit a heat deflection temperature of 84°C. or above, and preferably about 90°C., at 1.82 MPa (264 psi) as measured by the ASTM procedure D 648—72. In still another preferred embodiment, the copolymer is a copolymer of a styrene, preferably styrene, and maleic anhydride. A further aspect of this invention is that the copolymer may be a rubber-modified copolymer.

The polyethylene terephthalate used herein is preferably homopolymeric PET. Halogenated PET can also be used and is normally formed by condensation of a mixture of a halogenated, preferably brominated, terephthalic acid (e.g., 2,5-dibromoterephthalic acid and 2,3,5,6-tetrabromoterephthalic acid) and terephthalic acid with ethylene glycol. Additionally, the polyethylene terephthalate used herein can also contain up to 10 mol percent, relative to the acid component, of radicals of other aromatic dicarboxylic acids such as, for example, phthalic acid, isophthalic acid, naphthalene-2,6-dicarboxylic acid, diphenyl-4,4'-dicarboxylic acid as well as their halogenated counterparts. The copolymers can also contain up to 10 mol percent, relative to the glycol component, of radicals of other glycols such as, for example, propylene glycol, butylene glycol, dibromoneopentyl glycol, bis(2-hydroxyethyl) ether of tetrabromobisphenol A and tetrabromo-p-xylylene glycol. See Kirk-Othmer, *Encyclopedia of Chemical Technology,* Second Edition, Vol. 16, pp. 161—173 (1968).

The polyethylene terephthalates used herein should be moldable, and in a preferred embodiment they have an intrinsic viscosity (I.V.) of between about 0.25 and 1.5, most preferably between about 0.5 and 1.2, as measured at 25°C. using 0.25 grams of polyester per 100 ml of a solvent consisting of 60 percent by weight phenol and 40 percent by weight of tetrachloroethane.

The amount of polyethylene terephthalate resin used in the blends of this invention preferably falls within the range of from about 10 to about 90 weight percent based on the total weight of resin in the blend and the amount of the unsaturated cyclic anhydride copolymer falls within the range of from about 90 to about 10 weight percent also based on the total weight of resin in the blend. In a particularly preferred embodiment the relative amounts of the PET and the copolymer fall within the range of from about 20 to about 80 and from about 80 to about 20 weight percent respectively, the total being equal to 100. Most preferably, the amounts used fall within the range of 30 to 70 and from about 70 to 30 weight percent respectively.

Copolymers of a vinyl aromatic compound and an α,β-unsaturated cyclic anhydride are well known in the art and are described in the literature. In general, they are prepared by conventional bulk or solution techniques using free-radical initiation. For example, styrene-maleic anhydride copolymers can be obtained by simply reacting the two monomers, i.e., styrene and maleic anhydride, at 50°C. in the presence of benzoyl peroxide. The rate of polymerization may be better controlled if a solvent such as acetone, benzene or xylene is used.

Vinyl aromatic compounds of component (b) can be derived from compounds of the formula:

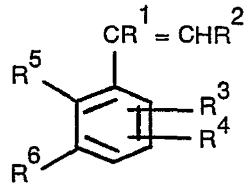

where $R^1$ and $R^2$ are selected from the group consisting of (lower) alkyl groups of from 1 to 6 carbon atoms and hydrogen; $R^3$ and $R^4$ are selected from the group consisting of chloro, bromo, hydrogen and (lower) alkyl of from 1 to 6 carbon atoms; $R^5$ and $R^6$ are selected from the group consisting of hydrogen and (lower) alkyl groups of from 1 to 6 carbon atoms or $R^5$ and $R^6$ may be concatenated together with hydrocarbyl groups to form a naphthyl group. These compounds are free of any substituent that has a tertiary carbon atom. Styrene is the preferred vinyl aromatic compound.

The cyclic anhydride compounds of component (b) are preferably α,β-unsaturated dicarboxylic anhydrides. For example, the term cyclic anhydride identifies anhydrides having the formula:

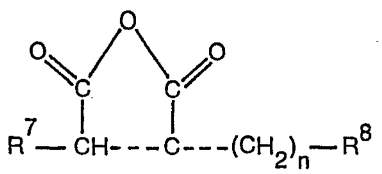

wherein the dotted lines represent a single or a double carbon-to-carbon bond, $R^7$ is selected from the group consisting of hydrogen, alkyl or aryl radicals containing up to 8 carbon atoms, $R^8$ is selected from the group consisting of hydrogen, vinyl, alkyl, alkenyl, alkylcarboxylic or alkenylcarboxylic of from 1 to 12 carbon atoms and n is an integer of from 0 to about 10. Examples include maleic anhydride, methyl maleic anhydride, dimethyl maleic anhydride, citraconic anhydride, itaconic anhydride, phenylmaleic anhydride, aconitic anhydride, and mixtures thereof. Maleic anhydride is the preferred anhydride of component (b). See also in this connection U.S. 4,107,149 and U.S. 4,113,797.

Copolymers of vinyl aromatic compounds and α,β-unsaturated cyclic anhydrides which can be used in the practice of this invention are described in U.S. Patents 2,769,804; 2,971,939 and 3,336,267.

These copolymers can be rubber-modified copolymers. In preparing these rubber-modified copolymers use of such rubbers as polybutadiene, an isobutyleneisoprene copolymer, a styrene-butadiene copolymer, a butadiene-acrylonitrile copolymer, an ethylenepropylene copolymer, a polyisoprene, ethylene-propylenediene monomer terpolymers (EPDM) can be employed. In this connection, see U.S. 3,919,354.

Component (b) copolymers can comprise from about 40 to about 50 parts by weight of the α,β-unsaturated cyclic anhydride, from about 60 to about 95 parts by weight of a vinyl aromatic compound and from 0 to 50 parts by weight of rubber. Preferred polymers include those wherein the relative proportions of the styrene and the anhydride fall within the range of from about 90 to about 70 weight percent and from about 10 to about 30 weight percent, respectively. Preferred rubber-modified polymers used herein contain about 5—25 parts by weight of the α,β-unsaturated cyclic anhydride, 40—85 parts by weight of the vinyl aromatic compound, and from about 5 parts to about 30 parts by weight of rubber.

A preferred unmodified vinyl aromatic α,β-unsaturated cyclic anhydride copolymer useful in the composition of this invention is Dylark® 332, supplied by Arco Polymers. Dylark® 332 is a styrene-maleic anhydride copolymer containing about 14 percent maleic anhydride, the balance being styrene. Still another preferred unmodified vinyl aromatic α,β-unsaturated cyclic anhydride copolymer is Dylark® DKB 134, also made by Arco Polymers. This SMA copolymer contains about 17 percent maleic anhydride, the balance being styrene. A preferred rubber-modified vinyl aromatic α,β-unsaturated cyclic anhydride copolymer is Dow Experimental Resin XP-5272.07 made by Dow Chemical Company. This is a high impact styrene-maleic anhydride copolymer containing about 21.5 weight percent butadiene, about 21 weight percent maleic anhydride and about 57.5 weight percent styrene. Still another preferred rubber-modified copolymer is Dylark® 350 (Arco Polymers) containing 10 percent by weight rubber, 12.5 percent maleic anhydride, with the balance being styrene.

Compositions of this invention can also include other ingredients, such as flame retardants, extenders, processing aids, pigments and stabilizers for their conventionally employed purposes. Reinforcing fillers, in amounts sufficient to impart reinforcement, can be used, such as carbon filaments, silicates, such as acicular calcium silicate, asbestos, titanium dioxide, potassium titanate and titanate whiskers, glass flakes and fibers.

Particularly preferred compositions of this invention include those containing impact modifiers. Examples include ethylene/vinyl acetate copolymers, ethylene/acrylic acid copolymers (having some of the acid functions neutralized), ethylene/methacrylic acid copolymers (having some of the methacrylic acid functions neutralized), ethylene/alkyl acrylate/methacrylic acid terpolymer (also having some of the methacrylic acid functions neutralized), ABS, oxidized polyethylene, styrene-butadiene-styrene (S-B-S) block copolymers, styrene/butadiene multiblock copolymers, styrene/butadiene radial block copolymers,

hydrogenated S-B-S block copolymers, styrene/butadiene rubber, acrylic rubbers, EPDM, ethylene/acrylic acid copolymers, ethylene/methyl acrylate copolymers, ethylene/ethyl acrylate copolymers and polyester-ether multiblock copolymers. These materials are available in a wide range of molecular weights and it is generally desirable that the impact modifier, when used, has a melt viscosity close to that of the substrate. Amounts of impact modifiers generally fall within the range of from about 5 to about 40 percent by weight.

For protection against thermo-oxidative degradation, the customary amounts of stabilizers, preferably 0.001 to 0.5 percent by weight, relative to the unfilled and unreinforced compositions of this invention, can be added to the compositions according to the invention. Examples of suitable stabilizers are phenols and phenol derivatives, preferably sterically hindered phenols which contain alkyl substituents with 1—6 C atoms in the two positions ortho to the phenolic hydroxyl groups, amines, preferably secondary arylamines and their derivatives, phosphates and phosphites, preferably the aryl derivatives thereof and quinones. Examples include 4,4' - bis - (2,6 - di - tert - butylphenol), 1,3,5 - trimethyl - 2,4,6 - tris - (3,5 - di - tert - butyl - 4 - hydroxybenzyl) - benzene, 4,4' - butylidene - bis - (6 - tert - butyl - m - cresol), 3,5 - di - tert - butyl - 4 - hydroxybenzyl - phosphonic acid diethyl ester, N,N' - bis - (β - naphthyl) - p - phenylenediamine, N,N' - bis - (1 - methyl - heptyl) - p - phenylenediamine, phenyl - β - naphthylamine, 4,4' - bis - α,α - dimethylbenzyl) - diphenylamine, hydroquinone, p-benzoquinone, toluhydroquinone, p-tert-butylpyrocatechol, chloranil and naphthoquinone.

Flame-retarding additives which can be used for the compositions according to the invention comprise a large number of chemical compounds which are well known to those skilled in the art. In general, they contain chemical elements which are used because of their flame-retarding capacity, for example, bromine, chlorine, antimony, phosphorus and nitrogen. Preferably the flame-retarding additives are halogenated organic compounds (brominated or chlorinated), optionally as a mixture with organic or inorganic antimony compounds, for example, antimony trioxide, elementary phosphorus or phosphorus compounds of halogen-containing compounds as a mixture with phosphorus compounds or compounds which contain phosphorus-nitrogen bonds.

Preferred reinforcing fillers are fiberglass, mineral fillers, particulate fillers such as mica. In general, optimum physical properties can be obtained if glass filaments are employed in amounts of from about 5 to about 40 percent by weight, based on the combined weight of glass and resin. However, higher amounts can be used.

Compositions of the invention may be prepared by blending the components in a mixer (e.g., a Henschel mixer) and compounding the mixture on an extruder (e.g., a twin-screw 28 mm Werner-Pfleiderer extruder). Thereafter, the extrudate is chopped into pellets and molded on an injection molding machine.

The present invention is further illustrated in the following examples, which are not to be construed as limiting. All parts are by weight.

Examples 1 and 2

Compositions of the following examples were prepared by mixing the components to form a premix, compounding the premix on a screw extruder at temperatures about 525° to 550°F. (274°—288°C.), and molding the pellets into test bars on a New Britain injection molding machine.

The particular materials used in these compositions were as follows:

a. Polyethylene terephthalate; from Goodyear Tire and Rubber Company; VFR 2977A-crystalline PET having an intrinsic viscosity of 0.68±0.025 as measured at 25°C. using 0.25 grams of polyester per 100 ml of a solvent consisting of 60 percent by weight phenol and 40 percent by weight of tetrachloroethane.

b. Styrene/maleic anhydride copolymer; from Arco Polymers; Dylark® DKB 134.

The PET/SMA copolymer weight:weight ratio in the blend of Example 1 was 70:30 and that of Example 2 was 60:40. Test bars of the above compositions were tested according to ASTM procedures to evaluate physical properties. The ASTM designation numbers for the properties measured were as follows: Specific Gravity—D 792—66 (1975); Tensile-Yield, Elongation and Tensile Elastic Modulus—D 638—77a; Flexural Strength and Flexural Elastic Modulus—D 790—71 (1978); Izod Impact for 6.4 mm (1/4") bar, 3.2 mm (1/8") bar and 3.2 mm (1/8") bar at 40°C—D 256—78; Heat Deflection Temperature—D 648—72 (1978); Vicat Softening Point—D 1525—76; and Rockwell Hardness—D 785—65 (1976). The results are shown in Table I.

TABLE I

| Property | Example 1 | Example 2 |
|---|---|---|
| Specific Gravity | 1.260 | 1.247 |
| Tensile-Yield, MPa (psi) | 50.40 (7310) | 52.33 (7590) |
| Elongation, % | 1.6 | 2.0 |
| Tensile Elastic Modulus, $10^3$ MPa (psi) | 3.28 (470) | 3.12 (447) |
| Flexural Strength, MPa (psi) | 88.70 (12,700) | 94.28 (13,500) |
| Flexural Elastic Modulus, $10^3$ (psi) | 3.08 (441) | 3.25 (465) |
| Izod Impact, 6.4 mm (1/4") bar, N.m/m (ft.-lb./in.) | 21 (0.4) | 16 (0.3) |
| Izod Impact 3.2 mm (1/8") bar, N.m/m (ft.-lb./in.) | 21 (0.4) | 16 (0.3) |
| Izod Impact, 3.2 mm (1/8") bar, N.m/m (ft.-lb./in.) (at 40°C.) | 21 (0.4) | 16 (0.3) |
| Heat Deflection Temp. at 1.82 MPa (264 psi), °C. | 95 | 94 |
| Heat Deflection Temp. at 0.46 MPa (66 psi), °C. | 120 | 117 |
| Vicat Softening Point, °C. | 207 | 195 |
| Rockwell Hardness, R scale | 120 | 119 |

Examples 3—7

The following components were blended and molded as described in Examples 1 and 2.

a. Polyethylene terephthalate-Cleartuf 8502A; from the Goodyear Tire and Rubber Company having an intrinsic viscosity of 0.85 as measured at 25°C. using 0.25 grams of polyester per 100 ml of a solvent consisting of 60 percent by weight phenol and 40 percent by weight of tetrachloroethane.

b. Styrene/maleic anhydride copolymer; Dylark® 332 from Arco Polymers.

The proportions (weight percentages) used were as follows:

| | Example | | | | |
|---|---|---|---|---|---|
| Components | 3 | 4 | 5 | 6 | 7 |
| a. PET | 70 | 55 | 40 | 25 | 10 |
| b. Styrene/Maleic Anhydride | 30 | 45 | 60 | 75 | 90 |

Physical property testing as in Examples 1 and 2 gave results shown in Table II.

TABLE II

| Property | Example 3 | Example 4 | Example 5 | Example 6 | Example 7 |
|---|---|---|---|---|---|
| Tensile Yield, MPa ($10^3$ psi) | 61.29 (8.89) | 56.95 (8.26) | 54.47 (7.90) | 45.30 (6.57) | 43.23 (6.27) |
| Elongation, % | 2.8 | 2.1 | 1.8 | 2.8 | 1.4 |
| Tensile Modulus, $10^3$ MPa (psi) | 3.03 (434) | 3.18 (456) | 3.37 (482) | 3.47 (497) | 2.96 (424) |
| Flexural Strength, $10^3$ MPa (psi) | 0.106 (15.2) | 0.093 (13.3) | 0.091 (13.1) | 0.081 (11.6) | 0.073 (10.4) |
| Flexural Modulus, $10^3$ MPa (psi) | 3.08 (441) | 3.18 (455) | 3.30 (473) | 3.35 (480) | 3.39 (485) |
| Notched Izod, 3.2 mm (1/8") bar, N.m/m (ft.-lb./in.) | 16 (0.3) | 16 (0.3) | 11 (0.2) | 11 (0.2) | 11 (0.2) |
| Unnotched Izod, 3.2 mm (1/8") bar, N.m/m (ft.-lb/in.) | 363 (6.8) | 288 (5.4) | 203 (3.8) | 149 (2.8) | 107 (2.0) |
| Heat Deflection Temp. at 1.82 MPa (264 psi), °C. | 84 | 105 | 105 | 109 | 110 |
| Heat Deflection Temp. at 0.46 MPa (66 psi) °C. | 110 | 122 | 121 | 120 | 121 |

Examples 8—12

Rubber-modified styrene/maleic anhydride copolymers were blended and molded in the same manner outlined in Examples 1 and 2. The following components were used;

a. Polyethylene terephthalate-Vituf 5900; from Goodyear Chemical Company, having an intrinsic viscosity of 0.59 as measured at 25°C. using 0.25 grams of polyester per 100 ml of a solvent consisting of 60 percent by weight phenol and 40 percent by weight of tetrachloroethane.

b. Styrene/maleic anhydride copolymer; Dylark® 332 from Arco Polymers.

c. Rubber-modified SMA containing 10 percent rubber, 12.5 percent maleic anhydride, with the balance being styrene; Dylark® 350 from Arco Polymers.

d. Rubber-modified SMA containing 21.5 weight percent butadiene, 21 weight percent maleic anhydride and 57.5 weight percent styrene; Dow XP 5272.07 from Dow Chemical Company.

The proportions (weight percentages) used were as follows:

| Components | Example 8 | 9 | 10 | 11 | 12 |
|---|---|---|---|---|---|
| a. PET | 70 | 55 | 66.7 | 55 | 60 |
| b. Styrene/Maleic Anhydride | 30 | 45 | None | None | None |
| c. Rubber-Modified Styrene/Maleic Anhydride | None | None | 33.3 | 45 | None |
| d. Rubber-Modified Styrene/Maleic Anhydride | None | None | None | None | 40 |

Physical property testing as in Examples 1 and 2 gave the results shown in Table III.

TABLE III

| Property | Example 8 | 9 | 10 | 11 | 12 |
|---|---|---|---|---|---|
| Notched Izod 3.2 mm (1/8") bar, N. m/m (ft.-lb/in.) | 16 (0.3) | 16 (0.3) | 27 (0.5) | 32 (0.6) | 32 (0.6) |
| Unnotched Izod 3.2 mm (1/8") bar, N. m/m (ft.-lb/in.) | 368 (6.9) | 256 (4.8) | 854 (16.0) | 614 (11.5) | 1110 (20.8) |
| Heat Deflecting Temp. at 1.82 MPa (264 psi), °C. | 87 | 95 | 87 | 96 | 85 |
| Heat Deflection Temp. at 0.46 MPa (66 psi), °C. | 124 | 117 | 119 | 117 | 137 |

Comparative Example

The PET used in Examples 8—12 was molded in the manner outlined in Examples 1 and 2. Physical property testing in accordance with the ASTM procedures of Examples 1 and 2 showed the neat PET to have an HDT of 76°C. at 1.82 MPa (264 psi), an HDT of 104°C. at 0.46 MPa (66 psi), a 3.2 mm (1/8 inch) notched Izod Impact of 32 N. m/m (0.6 ft.-lb./in.), a flexural strength of 106 MPa (15,200 psi) and a flexural modulus of 2758 MPa (400,000 psi).

**Claims**

1. A thermoplastic molding composition which comprises, in intimate admixture;

(a) a polyethylene terephthalate, and

(b) a copolymer of a vinyl aromatic compound and an α,β-unsaturated cyclic anhydride;

said composition having a heat deflection temperature of about 84°C. or above at 1.82 MPa (264 psi) as measured by the ASTM procedure D 648—72.

2. A composition of Claim 1 having a heat deflection temperature of at least about 90°C. at 1.82 MPa (264 psi) as measured by the ASTM procedure D 648—72.

3. A composition of Claim 1 wherein (b) is a copolymer of a styrene and maleic anhydride.

4. A composition of Claim 1 wherein (b) is a copolymer of styrene and maleic anhydride.

5. A composition of Claim 1 wherein (b) is rubber-modified.

6. A composition of Claim 1 wherein the relative proportions of (a) and (b) fall within the range of from about 10 to about 90 weight percent of (a) with from about 90 to about 10 weight percent of (b), the total of (a) and (b) being equal to 100.

7. A composition of Claim 1 wherein the relative proportions of (a) and (b) fall within the range of from about 20 to about 80 weight percent of (a) with from about 80 to about 20 weight percent of (b), the total of (a) and (b) being equal to 100.

8. A composition of Claim 1 having a heat deflection temperature of at least about 90°C. at 1.82 MPa (264 psi) as measured by the ASTM procedure D 648—72, and wherein (b) consists essentially of a rubber-modified copolymer of styrene and maleic anhydride.

9. A composition of Claim 1 wherein said polyethylene terephthalate has an intrinsic viscosity of between about 0.5 and 1.2 as measured at 25°C, using 0.25 grams of polyester per 100 ml of a solvent consisting of 60 percent by weight phenol and 40 percent by weight of tetrachloroethane and wherein (b) consists essentially of styrene and maleic anhydride.

10. A composition of Claim 9 wherein the relative proportions of said styrene and said anhydride fall within the range of from about 90 to about 70 weight percent and from about 10 to about 30 percent, respectively.

**Patentansprüche**

1. Thermoplastische Formmasse, die in einem innigen Gemisch enthält:

(a) ein Polyethylenterephthalat und

(b) ein Copolymerisat einer Vinyl-aromatischen Verbindung

und eines α,β-ungesättigten, zyklischen Anhydrids, wobei die genannte Masse bei Messung nach dem ASTM-Verfahren D 648—72 eine Wärmestandfestigkeit von etwa 84°C oder mehr bei 1,82 MPa besitzt.

2. Formmasse nach Anspruch 1, dadurch gekennzeichnet, daß sie bei Messung nach dem ASTM-Verfahren D 648—72 eine Wärmestandfestigkeit von mindestens etwa 90°C bei 1,82 MPa besitzt.

3. Formmasse nach Anspruch 1, dadurch gekennzeichnet, daß (b) ein Copolymerisat eines Styrols und von Maleinsäureanhydrid ist.

4. Formmasse nach Anspruch 1, dadurch gekennzeichnet, daß (b) ein Copolymerisat von Styrol und Maleinsäureanhydrid ist.

5. Formmasse nach Anspruch 1, dadurch gekennzeichnet, daß (b) kautschukmodifiziert ist.

6. Formmasse nach Anspruch 1, dadurch gekennzeichnet, daß die relativen Anteile von (a) und (b) in dem Bereich von etwa 10 bis etwa 90 Gew.% (a) und etwa 90 bis etwa 10 Gew.% (b) liegen, wobei die Summe von (a) und (b) gleich 100 ist.

7. Formmasse nach Anspruch 1, dadurch gekennzeichnet, daß die relativen Anteile von (a) und (b) in dem Bereich von etwa 20 bis etwa 80 Gew.% (a) und etwa 80 bis etwa 20 Gew.% (b) liegen, wobei die Summe von (a) und (b) gleich 100 ist.

8. Formmasse nach Anspruch 1, dadurch gekennzeichnet, daß sie bei Messung nach dem ASTM-Verfahren D 648—72 eine Wärmestandfestigkeit von mindestens etwa 90°C bei 1,82 MPa besitzt und daß (b) im wesentlichen aus einem kautschukmodifizierten Copolymerisat von Styrol und Maleinsäureanhydrid besteht.

9. Formmasse nach Anspruch 1, dadurch gekennzeichnet, daß das Polyethylenterephthalat bei Messung bei 25° eine Grenzviskosität von etwa 0,5 bis 1,2 besitzt, wenn zur Messung 0,25 g Polyester pro 100 ml eines Lösungsmittels verwendet werden, das aus 60 Gew.% Phenol und 40 Gew.% Tetrachlorethan besteht, und daß (b) im wesentlichen aus Styrol und Maleinsäureanhydrid besteht.

10. Formmasse nach Anspruch 9, dadurch gekennzeichnet, daß die relativen Anteile des Styrols und des Anhydrids in dem Bereich von etwa 90 bis etwa 70 Gew.% bzw. etwa 10 bis etwa 30% liegen.

**Revendications**

1. Composition qui comprend en mélange intime:

(a) un téréphtalate de polyéthylène et

(b) un copolymère d'un composé vinyl-aromatique et d'un anhydride cyclique à insaturation α,β; ladite composition ayant une température de déflexion par la chaleur d'environ 84°C ou plus à 1,82 MPa (264 psi) mesurée par le procédé ASTM D 648 72.

2. Composition selon la revendication 1, ayant une température de déflexion par la chaleur d'au moins 90°C environ à 1,82 MPa (264 psi) mesurée par le procédé ASTM D 648 72.

3. Composition selon la revendication 1, dans laquelle (b) est un copolymère d'un styrène et d'anhydride maléique.

4. Composition selon la revendication 1, dans laquelle (b) est un copolymère de styrène et d'anhydride maléique.

5. Composition selon la revendication 1, dans laquelle (b) est modifié par un caoutchouc.

6. Composition selon la revendication 1, dans laquelle les proportions relatives de (a) et (b) sont comprises entre environ 10 et environ 90% en poids de (a) pour environ 90 à environ 10% en poids de (b), le total de (a) et (b) étant égal à 100.

7. Composition selon la revendication 1, dans laquelle les proportions relatives de (a) et (b) sont comprises entre environ 20 et environ 80% en poids de (a) pour environ 80 à environ 20% en poids de (b), le total de (a) et (b) étant égal à 100.

8. Composition selon la revendication 1, ayant une température de déflexion par la chaleur d'au moins 90°C environ à 1,82 MPa (264 psi) mesurée par le procédé ASTM D 648 72, et dans laquelle (b) consiste essentiellement en un copolymère modifié par le caoutchouc de styrène et d'anhydride maléique.

9. Composition selon la revendication 1, dans laquelle ledit téréphtalate de polyéthylène a une viscosité intrinsèque entre 0,5 et 1,2 mesurée à 25°C en utilisant 0,25 g de polyester par 100 ml d'un solvant consistant en 60% pds de phénol et 40% pds de tétrachloréthane et dans laquelle (b) consiste essentiellement de styrène et d'anhydride maléique.

10. Composition selon la revendication 9, dans laquelle les proportions relatives dudit styrène et dudit anhydride sont comprises entre environ 90 et environ 70% en poids et entre environ 10 et environ 30%, respectivement.